**Europäisches Patentamt**

(19) **European Patent Office**

**Office européen des brevets**

(11) Veröffentlichungsnummer: **0 144 412**
**B1**

(12) # EUROPÄISCHE PATENTSCHRIFT

(45) Veröffentlichungstag der Patentschrift:
**30.03.88**

(51) Int. Cl.⁴: **F 23 J 1/00**

(21) Anmeldenummer: **84902443.5**

(22) Anmeldetag: **06.06.84**

(86) Internationale Anmeldenummer:
**PCT/DE 84/00127**

(87) Internationale Veröffentlichungsnummer:
**WO 84/04955 (20.12.84** Gazette 84/30)

(54) **AUSTRAGSCHNECKENFÖRDERER FÜR FESTE RÜCKSTÄNDE, BEI HOHER TEMPERATUR UND ÜBERDRUCK.**

(30) Priorität: **08.06.83 DE 3320595**

(43) Veröffentlichungstag der Anmeldung:
**19.06.85 Patentblatt 85/25**

(45) Bekanntmachung des Hinweises auf die Patenterteilung:
**30.03.88 Patentblatt 88/13**

(84) Benannte Vertragsstaaten:
**DE SE**

(56) Entgegenhaltungen:
**AT - A - 350 467**
**BE - A - 396 207**
**DE - B - 1 175 816**
**US - A - 3 578 216**

**Power, Band 126, September 1982 (Concord, New Hampshire, US), "Screw type ash coolers for fluidised-bed boilers", Seiten 156-157**

(73) Patentinhaber: **Rheinische Braunkohlenwerke AG., Stüttgenweg 2, D-5000 Köln 41 (DE)**

(72) Erfinder: **LAMBERTZ, Johannes, Jägerring 22, D-5014 Kerpen-Mannheim (DE)**
Erfinder: **BEISSEL, Hermann, Habichtweg 1, D-5020 Frechen-Bachem (DE)**

(74) Vertreter: **Koepsell, Helmut, Dipl.-Ing., Mittelstrasse 7, D-5000 Köln 1 (DE)**

**Beschreibung**

Die Erfindung betrifft eine unter hohen Temperaturen und Überdruck betriebene, mit einem Schneckenförderer versehene Einrichtung zum Umsetzen von festem, kohlenstoffhaltigem Material, wobei der Einlauf des Schneckenförderers zum Austragen von festen Rückständen der Austragsöffnung der Einrichtung nachgeordnet und der Schneckenförderer Teil des Drucksystems der Einrichtung ist. Bei einer solchen Einrichtung kann es sich beispielsweise um einen Reaktor zum Vergasen von festen, kohlenstoffhaltigen Substanzen oder um eine Wirbelbettfeuerung handeln, die üblicherweise auch unter Überdruck betrieben werden.

Bei den festen Rückständen wird es sich üblicherweise um Asche handeln, die noch einen mehr oder weniger grossen Anteil an nicht umgesetzten Kohlenstoff enthalten kann. Die festen Rückstände sind überwiegend feinkörnig, etwa entsprechend der Korngrösse der kohlenstoffhaltigen Materialien, normalerweise vorgebrochener oder gemahlener Kohle, die in der Einrichtung umgesetzt worden sind. Es ist aber unvermeidbar, dass Teile der Rückstände unter Bildung von grösseren Agglomeraten mit Abmessungen bis zu 40 cm zusammenbacken. Diese Agglomerate können beim Austragen der festen Rückstände zu erheblichen Betriebsstörungen führen, wenn keine besonderen Vorkehrungen getroffen werden. Hierbei ist zu berücksichtigen, dass der Schneckenförderer mit dem Reaktor oder dem Feuerungsraum ein einheitliches Drucksystem bildet, so dass es während des Betriebes der Gesamtanlage normalerweise nicht möglich ist, von aussen in das Innere des Drucksystems und damit auch das Innere des Schneckenförderers mit irgendwelchen Zerkleinerungswerkzeugen oder dgl. einzugreifen. Weiterhin muss der Tatsache Rechnung getragen werden, dass die festen Rückstände im unteren Teil des Reaktors oder dgl. und im Einlaufbereich des Schneckenförderers eine Feststoffsäule bilden, die ein absatzweises Vorbehandeln der festen Rückstände, beispielsweise unter Verwendung eines zwischengeschalteten Brechers, ausschliessen oder doch zumindest ausserordentlich erschweren. Schliesslich ist noch zu berücksichtigen, dass die Betriebstemperaturen in der Austragsöffnung der Einrichtung verhältnismässig hoch sind.

Die Erfindung geht aus von einem Schneckenförderer der einleitend beschriebenen Art, wie er beispielsweise im Zusammenhang mit einem Hochtemperatur-Winkler-Vergasungsreaktor in Chem.-Ing.-Tech., 48. Jahrg. 1976, Seite 1188, offenbart ist. Ihr liegt die Aufgabe zugrunde, einen Schneckenförderer derart auszugestalten, dass die vorerwähnten Nachteile vermieden werden. Insbesondere soll es auch bei unter hohen Temperaturen und unter Überdruck arbeitenden Anlagen möglich sein, trotz der vorerwähnten Agglomeratbildung die festen Rückstände störungsfrei auszutragen. Die in Betracht kommenden Temperaturen können in der Grössenordnung von 1000 °C und die Drücke im Bereich von 10 bis 50 und mehr bar liegen. Gleichzeitig sollen die festen Rückstände beim Durchgang durch den Schneckenförderer soweit gekühlt werden, dass sie nicht mehr mit dem Luftsauerstoff reagieren. Letzteres könnte zu unkontrollierten Bränden führen. Die vorstehend genannten Ziele sollen erreicht werden, ohne dass dazu für die Anlage insgesamt wesentlich komplizierende oder verteuernde Massnahmen notwendig wären.

Zur Lösung der Aufgabe schlägt die Erfindung vor, dass die Schnecke wenigstens zwei in Förderrichtung hintereinander angeordnete, lösbar, drehfest und biegefest miteinander verbundene Abschnitte aufweist, von denen der der Austragsöffnung der Einrichtung benachbarte Abschnitt massiver ausgebildet ist als der bzw. die daran anschliessende(n) Abschnitt(e) zur Zerkleinerung von grobkörnigen Bestandteilen der Rückstände und der bzw. die daran anschliessende(n) Abschnitt(e) überwiegend der Kühlung der Rückstände dienen, und das Gehäuse wenigstens auf Teilen seiner Längserstreckung von einem Kühlmittel durchströmt und/oder umströmt wird. Die Unterteilung der Schnecke in wenigstens zwei Abschnitte erleichtert einmal die Anpassung der einzelnen Abschnitte an die ihnen überwiegend zugeordnete Funktion. So kann jener Abschnitt der Schnecke, der mit den aus der Einrichtung kommenden festen Rückständen zuerst in Berührung kommt, an die Funktion des Zerkleinerns von Agglomeraten angepasst sein, wobei natürlich auch die Funktion des Transportierens erfüllt sein muss. Der daran anschliessende Abschnitt der Schnecke kann so ausgebildet werden, dass insbesondere den Kühl- und Transportfunktionen Rechnung getragen wird. Da der Zerkleinerungsfunktionen erfüllende Abschnitt der Schnecke in erheblich stärkerer Weise beansprucht wird und damit einem entsprechend grösseren Verschleiss unterliegt, trägt die Unterteilung auch wirtschaftlichen Belangen Rechnung, da bei Verschleiss des der Zerkleinerung dienenden Abschnittes nicht die gesamte Schnecke ausgetauscht zu werden braucht.

Entsprechendes gilt auch für eine Ausgestaltung, bei welcher gemäss einem weiteren Vorschlag der Erfindung das Schneckengehäuse ebenfalls entsprechend der Unterteilung der Schneckenabschnitte unterteilt ist, die druckdicht, jedoch lösbar miteinander verbunden sind. Das Gehäuse wird in dem Bereich, in welchem die Zerkleinerung gröberer Bestandteile überwiegend stattfindet, ebenfalls einem stärkeren Verschleiss unterliegen.

Im überwiegend die Zerkleinerungsarbeit leistenden Abschnitt der Schnecke, der wesentlich massiver ausgebildet ist, können die Schneckenstege im Schneckengrund abgerundet sein.

Zwar offenbart die DE-B-1 175 816 eine Schnecke für den Austrag von Schlacke aus einem Wassertrog, die in ihrem dem Austrag des Wassertrogs zugeordneten Bereich mit Schneid- und Brechzähnen besetzt ist und somit auch der Zerkleinerung von gröberen Schlackenteilen dient. Jedoch fehlt es hier an dem Merkmal, dass die Schnecke wenigstens zwei in Förderrichtung hintereinander angeordnet, lösbar, drehfest und biegefest miteinander verbundene Abschnitte aufweist, die beide an ihre jeweilige Hauptfunktion angepasst und darüber hinaus auch in Abhängigkeit vom jeweils auftretenden Verschleiss unabhängig voneinander ausgetauscht werden können. Ausserdem hat die bekannte Schnecke keine Kühlfunktion, da das Abkühlen der Asche zunächst im Wassertrog erfolgt, bevor sie von der Schnecke aufgenommen wird. Es liegen somit völlig andere Betriebsbedingungen vor. Dies ist auch darauf zurückzuführen, dass im bekannten Fall der Schneckenförderer nicht Teil des Drucksystems einer Einrichtung zum Umsetzen von kohlenstoffhaltigem Material dient. Ferner offenbart die BE-A-396 207 einen Schneckenförderer zum Austragen von Verbrennungsrückständen, dessen Schnecke von dem dem Austrag des Schneckenförderers zugekehrten Bereich massiver ausgeführt ist als am anderen Ende. Dies trägt der Tatsache Rechnung, dass die abzufördernden Verbrennungsrückstände über die gesamte Länge der Schnecke in den Förderer gelangen, so dass die von letzterem zu transportierende Aschenmenge in Förderrichtung der Schnecke zunimmt. Eine Zerkleinerungsfunktion ist dieser Schnecke nicht zugedacht. Zudem ist sie nicht unterteilt, so dass ggf. unterschiedlichem Verschleiss unterliegende Teile nicht unabhängig voneinander ausgetauscht werden können. Zudem ist auch dieser Schneckenförderer nicht Teil eines unter Druck stehenden Systems.

Gemäss einem weiteren Merkmal der Erfindung kann die Steigung der Schnecke in Förderrichtung im Anschluss an den Einlaufteil kontinuierlich zunehmen, und zwar vorzugsweise derart, dass die Steigung am Austragsende des Schneckenförderers etwa das 1,5- bis 2fache der Steigung im Bereich des Einlaufteils beträgt. Die Zunahme der Steigung hat zur Folge, dass die Fördergeschwindigkeit der durch die Schnecke zu transportierenden festen Rückstände bei konstanter Schneckendrehzahl in Förderrichtung stetig zunimmt, so dass der Füllungsgrad des Schneckenförderers in Förderrichtung im umgekehrten Verhältnis abnimmt. Damit wird der Gefahr begegnet, dass sich grössere Rückstandsteile, die nach der Zerkleinerung im ersten Abschnitt immer noch eine Grösse aufweisen, die etwa dem Querschnitt des Schneckenganges entspricht, sich im Zuge des Transportes im Schneckenförderer festsetzen können. Diese Gefahr bestünde insbesondere dann, wenn mehrere derartige grössere Teile im Schneckenförderer zusammentreffen. Ferner hat es sich als zweckmässig herausgestellt, die den äusseren Umfang der Schneckenstege bildende Fläche wenigstens auf Teilen der Längserstreckung der Schnecke derart abzuschrägen, dass sie im Längsschnitt mit der Horizontalen einen spitzen Winkel begrenzt, dessen Scheitelpunkt dem Austragsende des Schneckenförderers zugekehrt ist, d.h., dass diese Umfangsfläche der Schneckengänge in Förderrichtung einen zunehmenden Durchmesser aufweist. Diese Abschrägung begünstigt die Zerkleinerung gröberer Bestandteile der Rückstände, zumal die Zerkleinerungsarbeit praktisch ausschliesslich durch das Drehmoment der Schnecke aufgebracht werden muss. Die abgeschrägte äussere Umfangsfläche der Schneckenstege bildet einen «endlosen» sich drehenden Keil, der zur Zerkleinerung gröberer Bestandteile beiträgt und gleichzeitig verhindert, dass sich kleinere Teilchen der äusserst schmirgelfähigen Rückstände zwischen den Schneckensteg und die Gehäusewand zwängen und deren Verschleiss begünstigen.

Die Abschrägung des äusseren Umfanges der Schneckengänge kann über die gesamte Länge der Schnecke vorgesehen sein. Es ist aber in Abhängigkeit von den jeweiligen Gegebenheiten auch möglich, beispielsweise nur den ersten, im wesentlichen der Zerkleinerung dienenden, Abschnitt der Schnecke so auszubilden.

Im übrigen kann der Bereich des Extruders, in welchem die Zerkleinerung überwiegend erfolgt, mit einer Panzerung, beispielsweise in Form einer Auftragschweissung, versehen sein, die nach Verschleiss erneuert wird.

Zur Erhöhung der Kühlwirkung kann die Schnecke – gegebenenfalls in allen Abschnitten – mit inneren Kanälen für den Durchgang eines Kühlmittels versehen sein. Diese Kanäle können auch zur Erzielung eines besonders guten Wärmeüberganges in den Schneckenstegen vorhanden sein.

Die Länge des Schneckenförderers wird im wesentlichen durch die erforderliche Kühlleistung bestimmt, da aus den bereits genannten Gründen die Temperatur der festen Rückstände bei Verlassen des Schneckenförderers bzw. der diesem nachgeordneten Druckschleuse eine bestimmte Temperatur nicht überschreiten soll.

Das Gehäuse des Schneckenförderers ist zweckmässig mit einem mit der Wandung der Austragsöffnung des Reaktionsraumes der Einrichtung verbundenen Einlaufteil versehen, wobei die Schnecke mit dem sie umgebenden Gehäuse 1 unter einem von 180° abweichenden Winkel, vorzugsweise rechtwinklig, zur Längsachse des Einlaufteiles verläuft. Als besonders zweckmässig hat sich eine Ausführung herausgestellt, bei welcher der Einlaufteil mit wenigstens einer Zuführung für ein gasförmiges Medium versehen ist, welches der Auflockerung des im Bereich der Austragsöffnung des Reaktionsraumes und/oder im Einlaufteil befindlichen auszutragenden Rückstände dient.

Da das gasförmige Medium in den Reaktionsraum der Einrichtung gelangt, wird es zweckmässig so gewählt sein, dass es an den dort stattfindenden Umsetzungen teilnimmt, d.h., dass es sich bei dem gasförmigen Medium im Falle eines Winkler-Reaktors beispielsweise um Kohlendioxid, Luft oder Dampf handeln kann. Da die umzusetzenden kohlenstoffhaltigen Materialien im Reaktionsraum durchwegs ein Wirbelbett bilden, kann das gasförmige Medium auch gleichzeitig als Fluidisierungsmittel im Reaktor dienen.

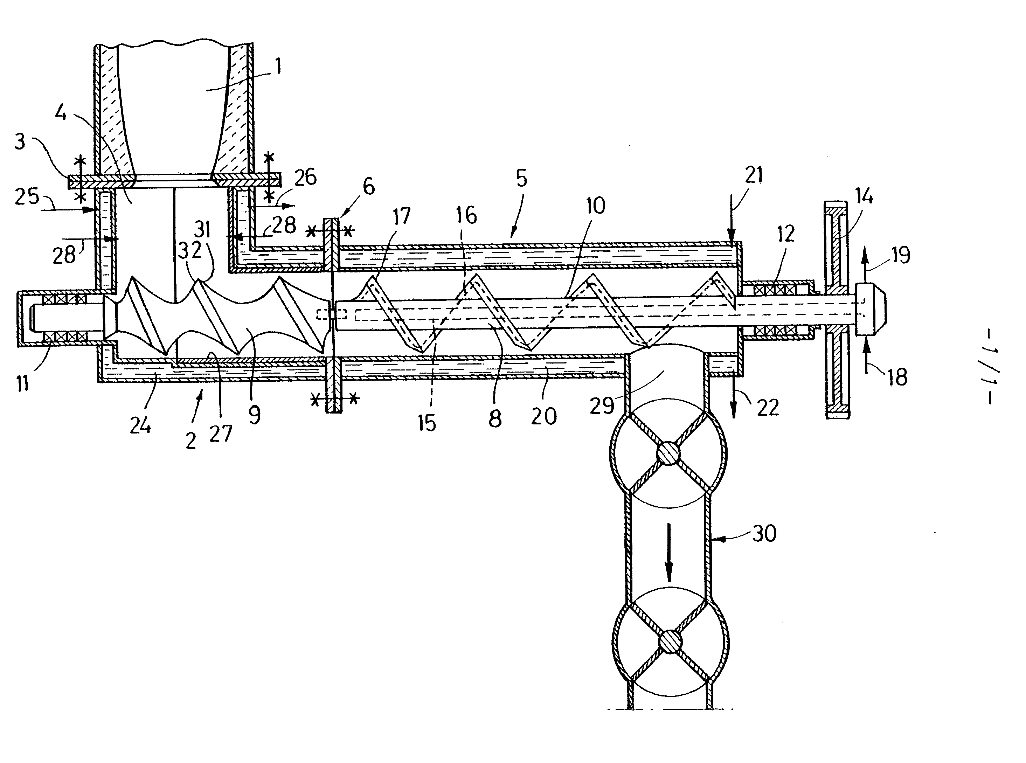

In der Zeichnung ist als Ausführungsbeispiel ein Längsschnitt durch einen Schneckenförderer schematisch dargestellt.

An der Austragsöffnung einer Einrichtung 1, beispielsweise eines Reaktors, ist ein erster Gehäuseabschnitt 2 eines Schneckenförderers über eine lösbare Flanschverbindung 3 druckfest angebracht, wobei der erste Gehäuseabschnitt 2 einen Einlaufteil 4 aufweist, welcher in Verlängerung der Austragsöffnung des Reaktors 1 und im wesentlichen koaxial zu dessen Längsachse verläuft. Am ersten Gehäuseabschnitt 2 ist an dessen rechtwinklig zum Einlaufteil 4 verlaufenden Bereich ein zweiter Gehäuseabschnitt 5 druckfest, jedoch lösbar mittels einer Flanschverbindung 6 angebracht. In den beiden Gehäuseabschnitten 2 und 5 ist dazu koaxial und mittig eine Schnecke 8 drehbar angeordnet, die ihrerseits entsprechend der Unterteilung des Gehäuses 2, 5 in zwei Abschnitte 9 und 10 unterteilt ist.

Der erste Gehäuseabschnitt 2 umgibt die Einzugs- und Zerkleinerungszone des Schneckenförderers, während der sich daran anschliessende Gehäuseabschnitt 5 den Bereich umschliesst, der im wesentlichen – neben dem Transport der festen Rückstände – der Kühlung derselben dient. Selbstverständlich erfolgt auch bereits im ersten Gehäuseabschnitt 2 eine Kühlung, welche von der Wandung des Gehäuseabschnittes ausgeht.

Die beiden Schneckenabschnitte 9 und 10 sind im Bereich der Verbindung 6 der beiden Abschnitte des Gehäuses lösbar, jedoch drehfest und biegefest miteinander verbunden.

Die Schnecke 8 ist in der Nähe des Einlaufteils 4 in einem Lager 11 und am Auslaufende in einem Lager 12 gelagert.

Der Antrieb der Schnecke 8 erfolgt über ein Zahnradvorgelege 14.

Der Abschnitt 10 der Schnecke 8 ist mit Kanälen 15 und 16 für den Durchgang eines Kühlmittels versehen. Die Kanäle 15 befinden sich im Kern des Abschnittes 10, wohingegen die Kanäle 16 innerhalb der Stege 17 verlaufen. Die Kühlmittelzufuhr für die Schnecke 8 ist bei 18 angedeutet. Die Ableitung des Kühlmittels nach Passieren des Schneckenabschnittes 8 und gegebenenfalls der Stege 17 ist mit 19 bezeichnet.

Der Gehäuseabschnitt 5 ist ebenfalls mit Kanälen 20 für den Durchgang eines Kühlmittels versehen, das bei 21 in das Gehäuse 5 eintritt und dieses bei 22 verlässt.

Der Gehäuseabschnitt 2 weist Kanäle 24 für den Durchgang eines Kühlmittels auf, welches bei 25 zugeführt wird und bei 26 den Gehäuseabschnitt 2 wieder verlässt.

Die am stärksten beanspruchten Innenflächen des Gehäuseabschnittes 2 sind mit einer Auflage 27 versehen, die die eigentliche Gehäusewandung vor Verschleiss schützen soll.

Der Einlaufteil 4 ist kurz oberhalb der Schnecke 8 bzw. deren Abschnitt 9 mit über seinen Umfang verteilten Zuleitungen 28 für ein gasförmiges Medium versehen. Nahe dem dem Einlaufteil 4 abgekehrten Ende des Gehäuseabschnittes 5 ist dieser mit einer Austragsöffnung 29 versehen, an die sich eine Druckschleuse 30 anschliesst, durch die der ausreichend abgekühlte feste Rückstand aus dem unter Überdruck stehenden System ausgetragen wird.

Im Bereich der Austragsöffnung des Reaktors 1 und im Einlaufstutzen 4 bildet sich eine Feststoffsäule aus von den Umsetzungsrückständen, die durch das durch die Zuleitungen 28 zugeführte gasförmige Medium etwas aufgelockert wird. Damit soll unter Umständen vermieden werden, dass sich Brücken aus den Rückständen bilden, oder dass sich die Rückstände innerhalb der Austragsöffnung des Reaktors 1 und/oder des Einlaufteiles 4 festsetzen. Ausserdem bewirkt die Auflockerung eine gewisse Entmischung dahingehend, dass feineres Korn sofort nach unten in den Bereich der Schnecke 8 hindurchfällt.

Die gröberen Bestandteile der Rückstände werden im Bereich des ersten Gehäuseabschnittes 2 durch den Schneckenabschnitt 9 soweit zerkleinert, dass sie den Schneckenförderer passieren können. Die dazu notwendige Zerkleinerungsarbeit wird über das Drehmoment der Schnecke 8 aufgebracht. Die Zeichnung lässt erkennen, dass der im Gehäuseabschnitt 2 befindliche Schneckenabschnitt 9 wesentlich massiver ausgebildet ist als der daran anschliessende Schneckenabschnitt 10, der im wesentlichen nur der Kühlung und dem Transport der Rückstände dient. Zur Durchführung der Zerkleinerung sind die Umfangsflächen 32 der Schneckenstege 31 abgeschrägt.

Während der Verweilzeit im Schneckenförderer wird der mit einer Temperatur von z.B. 1000 °C aus dem Reaktor 1 kommende Rückstand auf eine Temperatur von beispielsweise 500 °C heruntergekühlt, mit der der Rückstand den Schneckenförderer bzw. die Schleuse 30 verlässt.

Der Schneckenförderer kann eine Länge von beispielsweise 3–6 m und einen Innendurchmesser von beispielsweise 200 mm aufweisen.

Die Flanschverbindungen 3 und 6 ermöglichen ein schnelles Entfernen des ersten Gehäuseabschnittes 2 und anschliessend auch des ersten Abschnittes 9 der Schnecke 8. Diese beiden Teile unterliegen dem grössten Verschleiss, da in ihrem Bereich die Zerkleinerung gröberer Bestandteile erfolgt. Zudem haben hier die Rückstände auch noch die höchste Temperatur, welche Tatsache ebenfalls zur Beanspruchung des Werkstoffs von Gehäuse und Schnecke beiträgt.

Der Schneckenförderer gemäss der Erfindung ermöglicht unter Anwendung verhältnismässig einfacher und raumsparender Mittel eine verhältnismässig geringe Menge pro Zeiteinheit an Rückständen aus einem Verbrennungs- oder Vergasungsprozess kontinuierlich auszutragen, und zwar unter Anwendung von Durchtrittsquerschnitten im Schneckenförderer, die auf die überdurchschnittliche Korngrösse der Rückstände abgestellt sind. Die Rückstandteile grösseren Durchmessers werden soweit zerkleinert, dass sie durch den Schneckenkanal hindurchgefördert werden können, ohne dass es dabei zu Druckverlusten im System kommt.

**Patentansprüche**

1. Unter hohen Temperaturen und Überdruck betriebene, mit einem Schneckenförderer versehene Einrichtung zum Umsetzen von festem, kohlenstoffhaltigem Material, wobei der Einlauf des Schneckenförderers zum Austragen von festen Rückständen der Austragsöffnung der Einrichtung nachgeordnet ist und der Schneckenförderer Teil des Drucksystems der Einrichtung ist, dadurch gekennzeichnet, dass die Schnecke (8) wenigstens zwei in Förderrichtung hintereinander angeordnete, lösbar, drehfest und biegefest miteinander verbundene Abschnitte (9, 10) aufweist, von denen der der Austragsöffnung der Einrichtung (1) benachbarte Abschnitt (9) massiver ausgebildet ist als der bzw. die anschliessende(n) Abschnitt(e) zur Zerkleinerung von grobkörnigen Bestandteilen der Rückstände, und der bzw. die daran anschliessende(n) Abschnitt(e) (10) überwiegend der Kühlung der Rückstände dienen, und das Gehäuse (2, 5) wenigstens auf Teilen seiner Längserstreckung von einem Kühlmittel durchströmt und/oder umströmt wird.

2. Einrichtung nach Anspruch 1, dadurch gekennzeichnet, dass auch das Schneckengehäuse (2, 5) entsprechend der Unterteilung der Schnecke (8) in Abschnitte unterteilt ist, die druckdicht, jedoch lösbar miteinander verbunden sind.

3. Einrichtung nach Anspruch 1, dadurch gekennzeichnet, dass die Steigung der Schnecke (8) in Förderrichtung im Anschluss an den Einlaufteil (4) kontinuierlich zunimmt.

4. Einrichtung nach Anspruch 1, dadurch gekennzeichnet, dass die den äusseren Umfang der Schneckenstege (17, 31) bildende Fläche (32) wenigstens auf Teilen der Längserstreckung der Schnecke (8) derart abgeschrägt ist, dass sie im Längsschnitt in Förderrichtung einen zunehmenden Durchmesser aufweist.

5. Einrichtung nach Anspruch 1, dadurch gekennzeichnet, dass wenigstens der Abschnitt (10) innere Kanäle (15) für den Durchgang eines Kühlmittels aufweist.

6. Einrichtung nach Anspruch 5, dadurch gekennzeichnet, dass auch die Schneckenstege (17) mit Kanälen (16) für den Durchgang eines Kühlmittels versehen sind.

7. Einrichtung nach einem der vorhergehenden Ansprüche, dadurch gekennzeichnet, dass der Abschnitt (2) des Gehäuses (2, 5) mit einem mit der Austragsöffnung der Einrichtung (1) verbundenen Einlaufteil (4) versehen ist und die Schnecke (8) mit dem sie umgebenden Gehäuse (2, 5) unter einem von 180° abweichenden Winkel, vorzugsweise rechtwinklig zur Längsachse des Einlaufteils (4) verläuft.

8. Einrichtung nach Anspruch 7, dadurch gekennzeichnet, dass der Einlaufteil (4) mit wenigstens einer Zuführung (28) für ein gasförmiges Medium versehen ist, welches der Auflockerung der im Bereich der Austrittsöffnung der Einrichtung (1) und im Einlaufteil (4) befindlichen auszutragenden Rückstände dient.

**Revendications**

1. Dispositif de convoyeur à vis pour l'évacuation de résidus solides carbonés à température élevée et en surpression, comportant une entrée disposée à la suite de l'orifice d'évacuation des résidus solides et un système à vis faisant partie d'un ensemble sous pression, caractérisé en ce que la vis sans fin (8) est réalisée en au moins deux tronçons (9, 10) disposés à la suite l'un de l'autre dans le sens du mouvement d'avancement assuré par le convoyeur, que ces tronçons sont associés l'un à l'autre de manière amovible par une liaison rigide en flexion qui les rend solidaires en rotation, que le tronçon (9) de la vis, situé directement à la suite de l'orifice d'évacuation (1) est réalisé de manière plus massive que le ou les tronçons suivants afin de concasser les grosses particules des résidus, le ou les tronçons suivants (10) assurant principalement le refroidissement des résidus et que le carter (2, 5) du convoyeur est parcouru et/ou entouré par un courant de fluide de refroidissement, au moins sur certaines parties de sa longueur.

2. Dispositif selon la revendication 1, caractérisé en ce que le carter (2, 5) de la vis san fin est également divisé en plusieurs tronçons correspondant à ceux de la vis (8) et que ces tronçons sont étanches à la pression et cependant reliés entre eux de manière amovible.

3. Dispositif selon la revendication 1, caractérisé en ce que le pas de la vis (8) augmente de manière continue, dans le sens du mouvement de transport, sur sa partie en regard de l'orifice d'entrée (4).

4. Dispositif selon la revendication 1, caractérisé en ce que le bord périphérique (32) des spires (17, 31) de la vis du convoyeur présente, au moins sur une partie de la longueur de ladite vis (8), un profil biseauté de manière telle que, vu en coupe longitudinale, son diamètre croît dans le sens du transport.

5. Dispositif selon la revendication 1, caractérisé en ce qu'au moins une partie (10) de la vis comporte des canaux internes (15), pour le passage d'un fluide de refroidissement.

6. Dispositif selon la revendication 5, caractérisé en ce que les spires (17) de la vis sont également pourvus de canaux (16) pour le passage d'un fluide de refroidissement.

7. Dispositif selon l'une des revendications 1 à 6, caractérisé en ce qu'un tronçon (2) du carter (2, 5) est pourvu d'une pièce d'entrée (4) reliée à l'orifice d'évacuation (1) des résidus solides et en ce que la vis (8) du convoyeur avec son carter (2, 5) qui l'entoure s'étend suivant un angle de moins de 180 degrés par rapport à l'axe de la pièce d'entrée (4), de préférence perpendiculairement à cet axe.

8. Dispositif selon la revendication 7, caractérisé en ce que la pièce d'entrée (4) est pourvue d'au moins une alimentation (28) en fluide gazeux destiné à disperser les résidus à évacuer dans la zone de l'orifice d'évacuation (1) et dans la pièce d'entrée (4).

## Claims

1. Apparatus which is operated at high temperatures and under an increased pressure and which is provided with a screw conveyor, for the reaction of solid carbonaceous material, wherein the intake of the screw conveyor for discharging solid residues is disposed downstream of the discharge opening of the apparatus and the screw conveyor is part of the pressure system of the apparatus, characterised in that the screw (8) has at least two portions (9, 10) which are arranged in succession in the conveying direction and which are connected together in a releasable, non-rotatable and bending-resistant manner, of which the portion (9) which is adjacent to the discharge opening of the apparatus (1) is more massive than the adjoining portion or portions for crushing coarse-grain components of the residues, and the adjoining portion or portions (10) serve predominantly for cooling the residues, and a coolant flows through and/or around the housing (2, 5) at least over parts of its longitudinal extent.

2. Apparatus according to claim 1, characterised in that the screw housing (2, 5) is also subdivided, in a manner corresponding to the subdivision of the screw (8), into portions which are pressure-tightly but releasably connected together.

3. Apparatus according to claim 1, characterised in that the pitch of the screw (8) continuously increases in the conveying direction, following the intake portion (4).

4. Apparatus according to claim 1, characterised in that the surface (32) forming the outer periphery of the screw flights (17, 31) is bevelled, at least over parts of the longitudinal extent of the screw (8), in such a way that it is of increasing diameter in longitudinal section in the conveying direction.

5. Apparatus according to claim 1, characterised in that at least the portion (10) has internal ducts (15) for a coolant to pass therethrough.

6. Apparatus according to claim 5, characterised in that the screw flights (17) are also provided with ducts (16) for a coolant to pass therethrough.

7. Apparatus according to one of the preceding claims, characterised in that the portion (2) of the housing (2, 5) is provided with an intake portion (4) connected to the discharge opening of the apparatus (1) and the screw (8) with the housing (2, 5) enclosing same extends at an angle which differs from 180°, preferably being a right angle, relative to the longitudinal axis of the intake portion (4).

8. Apparatus according to claim 7, characterised in that the intake portion (4) is provided with at least one feed (28) for a gaseous medium which serves to loosen up the residues to be discharged, which are disposed in the region of the outlet opening of the apparatus (1) and in the intake portion (4).